# EUROPÄISCHE PATENTSCHRIFT

(11) **EP 0 602 556 B1**
(45) Veröffentlichungstag und Bekanntmachung des Hinweises auf die Patenterteilung: **24.07.1996**
(21) Anmeldenummer: 93119908.7
(22) Anmeldetag: 10.12.1993
(51) Int. Cl.: B03B 9/06, B09B 5/00

(54) **Verfahren zur Entsorgung von Kraftfahrzeugen**
Method for the disposal of motor vehicles
Procédé pour l'élimination de véhicules automobiles

(30) Priorität: 15.12.1992 DE 4242113
(43) Veröffentlichungstag der Anmeldung: 22.06.1994
(73) Patentinhaber: SCHENCK ENGINEERING GmbH, D-64293 Darmstadt (DE)
(72) Erfinder: Rudnig, Michael, Dr.-Ing., D-64319 Pfungstadt (DE); Buchta, Bernhard, D-694287 Darmstadt (DE)
(74) Vertreter: Brandt, Ernst-Ulrich, Dipl.-Phys., Dipl.-Ing.

(56) Entgegenhaltungen:
- EP-A- 0 299 812
- DE-A- 3 640 501
- DE-A- 4 143 251
- DE-C- 4 110 419
- FR-A- 2 649 687
- US-A- 4 037 302
- US-A- 4 499 365

## Beschreibung

Die Erfindung betrifft Verfahren zur Entsorgung von Kraftfahrzeugen.

Es besteht das Bestreben, Kraftfahrzeuge, insbesonder Pkw, am Ende ihrer Betriebslebenszeit einer Entsorgung zuzuführen, die sich nicht nur darauf beschränkt, das Kraftfahrzeug kompakt zu verpressen. Sich verschärfende behördliche Auflagen sehen z. B. vor, zumindest die flüssigen Betriebsmittel, die Batterie, Kunststoffteile etc. vor dem Verpressen zu entfernen und getrennt zu entsorgen.

Aus der DE-Patentschrift 41 10 419 ist eine mobile Entsorgungseinheit bekannt, bei der das Kraftfahrzeug mit hängenden Rädern auf einen Container gesetzt wird, der in seiner Deckfläche eine dem Kraftfahrzeug zugeordnete Arbeitsöffnung sowie an den Außenflächen seitliche und eine stirnseitige Arbeitbühne aufweist, so daß Kraftfahrzeugkomponenten bzw. Betriebsmittel teils vom Innern des Containers aus und teils von außerhalb demontiert bzw. entfernt werden können. Die flüssigen Betriebsmittel werden in einzelnen Sammelbehältern aufgefangen; dabei kann z. B. bei der Bremsanlage ein druckluftgestütztes Entnehmen der Bremsflüssigkeit vorgesehen sein. Da die Arbeiten größtenteils vom Innern des Containers aus vorgenommen werden, ist die Entsorgung des Kraftfahrzeugs mühsam und zeitaufwendig.

Ein Verfahren und eine Vorrichtung zur Pkw-Entsorgung, bei dem das Kraftfahrzeug zwecks besserer Zugänglichkeit schwenkbar und in einer um seine Längsachse um 90° in die Vertikale geschwenkten Lage arretierbar ist, ist aus der DE 41 43 251 A1 bekannt. Bei diesem Verfahren wird nach dem Entfernen der Räder, der Scheiben, der Haube, der Türen und des Daches zunächst wenigstens der Kraftstoff und die Servo- bzw. Bremsflüssigkeit entfernt. Dabei wird der Tank aufgeschnitten und der herauslaufende Kraftstoff aufgefangen. Die Bremsflüssigkeit wird über die Entlüftungsnippel druckluftunterstützt entfernt. Danach werden die Fahrschemel einschließlich der Motor-Getriebe-Einheit bei gelösten Verbindungen festgehalten und die restliche Karosserie von den auf den Fahrschemeln befindlichen Einheiten abgerissen. Anschließend wird der Kühler entfernt und dabei die Kühlflüssigkeit aufgefangen sowie weitere Teile demontiert. Zum Auffangen von flüssigen Betriebsmittel sind Gitterroste am Boden und ein Auffangbehälter vorgesehen. Die Motor-Getriebe-Einheit wird nach dem Trennen vom Rest des Fahrschemels mit einem Schlagwerk in Stücke zerschlagen und die im Motor und Getriebe enthaltenen Öle von den Metallstücken getrennt. Es kann auch vorgesehen werden, alle Betriebsflüssigkeiten des Pkw in unter die entsprechenden Aggregate des angehobenen Kraftfahrzeugs positionierten Auffangschalen aufzufangen und entsprechenden Sammelbehältern zuzuleiten. Die Entnahme sowohl des Motor- als auch des Getriebeöls, die im nicht betriebswarmen Zustand sehr zähflüssig sind, ist jedoch zeitaufwendig.

Der Erfindung liegt die Aufgabe zugrunde, ein Verfahren zur Entsorgung von Kraftfahrzeugen zu schaffen, bei dem insbesondere die flüssigen Betriebsmittel umweltschonend und wenig zeit-aufwendig entfernt werden.

Erfindungsgemäß wird diese Aufgabe durch die Merkmale von Patentanspruch 1 gelöst. Nach dem erfindungsgemäßen Verfahren ergibt sich eine erhebliche Zeiteinsparung bei dem gesamten Entsorgungs- und Demontageprozeß eines Kraftfahrzeugs, da während der Zeitdauer des Entfernens der flüssigen Betriebsmittel weitere Demontagevorgänge nur in sehr eingeschränktem Umfang durchgeführt werden können. Auch wird mit der Erfindung der Zeitraum für die gesamte Entsorgung des Kraftfahrzeugs besser kalkulierbar, da z. B. bei zu entsorgenden Kraftfahrzeugen, die von einem Stellplatz oder Vorratslager im Freien kommen, die Außentemperaturen die Entsorgungszeit für zähflüssige Betriebsmittel in erheblichem Maße beeinflussen können. Darüber hinaus ist das erfindungsgemäße Verfahren umweltfreundlich, da sich die flüssigen Betriebsmittel nahezu restlos entfernen lassen; bei der späteren Behandlung der Behälter oder des Betriebssystems der entfernten flüssigen Betriebsmittel brauchen deshalb keine besonderen Maßnahmen für z. B. Restöle wie Sammelrinnen etc. vorgesehen werden. Nur in Ausnahmefällen dürfte es erforderlich sein, die Behälter oder das Betriebssystem zu spülen, um beispielsweise eine restlose Entfernung der flüssigen Betriebsmittelreste sicherzustellen. Dadurch, daß die flüssigen Betriebsmittel in mehreren Schritten, d. h. in mehreren Unterstationen der Betriebsmittel-Entsorgungsstation entfernt werden, ergibt sich eine optimale Zugänglichkeit des zu entleerenden Flüssigkeitssystems oder -behälters; ferner ergibt sich eine gravierende Verringerung der Verwechslungsgefahr beim Zuordnen der flüssigen Betriebsmittel zu ihren Entsorgungsbehältern. Die gesteuerte Entnahme der Kraftfahrzeuge aus einem Vorratslager ermöglicht die zeitsparende Entsorgung gleicher Komponenten auch bei unterschiedlichen Kraftfahrzeug-Typen oder -Marken. Beispielsweise kann dabei die Position der Entsorgungsmittel für die Betriebsflüssigkeiten wie Auffangtrichter, Drucklufteinrichtungen und Schraub- oder Durchstoßeinrichtungen in vorteilhafter Weise unverändert bleiben. Die chargenweise Entfernung von Komponenten ist besonders vorteilhaft, wenn statt einer endgültigen Verschrottung eine zumindest teilweise Wiederverwertung nach Instandsetzung beabsichtigt ist, da dann die instandzusetzenden Komponenten nicht einzeln den Instandsetzungsbetrieben zugeführt werden müssen.

Werden zunächst die leicht entflammbaren Flüssigkeiten und ihr zugehöriges Vorratssystem entfernt, können die anschließenden Demontageschritte räumlich getrennt unter deutlich verringerter Brandgefahr bzw. deutlich verringerten Sicherheitsauflagen und damit zügiger durchgeführt werden. Die Entfernung sämtlicher Betriebsflüssigkeiten in der Anfangsphase der Demontage erleichtert die weitere Handhabung des Kraftfahrzeugs, beispielsweise sein Schwenken oder Wenden, in den weiteren Verfahrensschritten.

Eine besonders einfache Methode der Herabsetzung der Viskosität flüssiger Betriebsmittel ist das indirekte Erwärmen über das Erwärmen des zugeordneten Behälters bzw. Gehäuses. Es kann jedoch jedes geeignete Verfahren Verwendung finden, beispielsweise die Erwärmung durch Wärmestrahlung oder Konvektion oder die Erwärmung durch direkten Kontakt mit einem Heizelement. Ferner kann vorgesehen werden, daß dem flüssigen Betriebsmittel ein Mittel zugesetzt wird, das beim Einwirken eines elektrischen, magnetischen oder elektromagnetischen Wechselfeldes eine Erwärmung bewirkt. Diese Methode empfiehlt sich besonders dann, wenn eine zugesetzte Substanz die weitere Entsorgung des entnommenen flüssigen Betriebsmittels erleichtert. Diese Gesichtspunkte gelten auch, wenn man zur Herabsetzung der Viskosität dem Betriebsmittel Chemikalien zusetzt. Verschiedene Methoden können alternativ oder zusammen angewendet werden. Statt einer Verringerung der Viskosität oder ergänzend dazu kann das flüssige Betriebsmittel auch durch Betreiben des zugeordneten Betriebssystems zeitsparend entfernt werden; beispielsweise kann die Entfernung der Servoflüssigkeit durch manuelles Betätigen des Servoystems (z. B. Servolenkung) oder durch Betätigen mit einer am Entsorgungs- bzw. Demontageplatz vorhandenen Energiequelle bewirkt oder unterstützt werden.

Besonders vorteilhaft ist die gleichzeitige Entfernung von flüssigen Betriebsmitteln mit nahezu gleicher Viskosität und nahezu gleicher durchschnittlicher Menge. Dies kann z. B. bei der Entfernung der Kühlflüssigkeit und des Treibstoffs in vorteilhafter Weise zur Anwendung kommen, da im allgemeinen die im Fahrzeug noch vorhandene Resttreibstoffmenge in etwa der Kühlflüssigkeitsmenge entspricht. Da der Treibstofftank entfernt vom Kühler angeordnet ist, sind beide leicht und schnell zugänglich, und es können die Sicherheitsauflagen bei der Entfernung des leicht entflammbaren Treibstoffes ohne größeren Umstand beachtet werden. Bei diesem Verfahrensschritt können ohne weiteres auch noch weitere Betriebsflüssigkeiten wie z. B. die Bremsflüssigkeit entsorgt werden, wenn beispielsweise unproblematische Platzverhältnisse vorliegen.

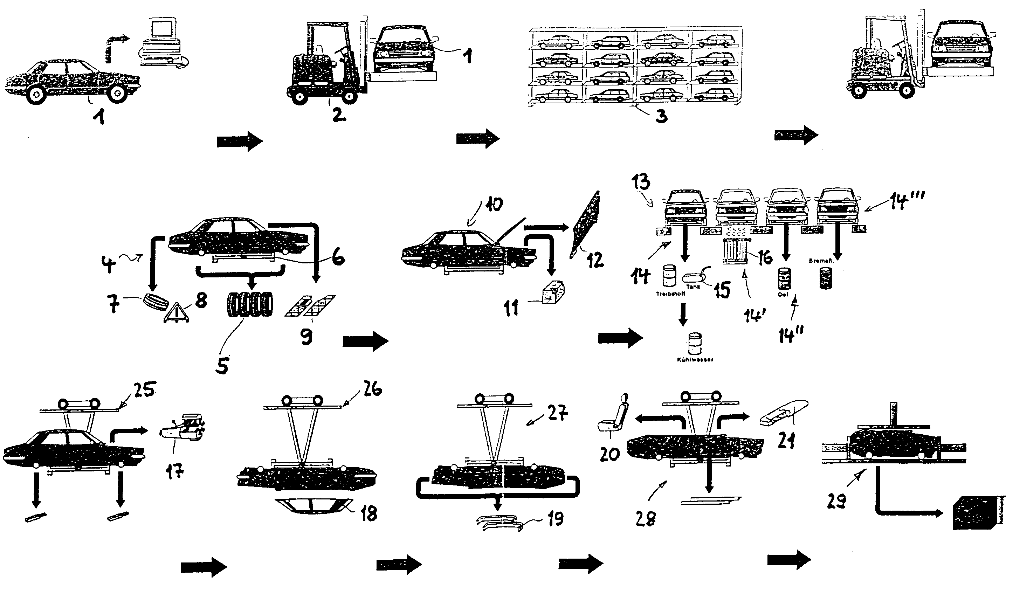

Die Erfindung wird im folgenden anhand der Zeichnung näher erläutert.

Das zu entsorgende Fahrzeug 1 wird nach Erfassung von Typ und Fabrikat und gegebenenfalls weiterer Daten in einer Datenerfassungsstation mittels eines geeigneten Transportmittels, im dargestellten Beispiel eines Hubwagens 2, in ein Vorratslager 3 verbracht, aus dem es vorzugsweise gesteuert anhand der erfaßten Daten der weiteren Entsorgung zugeführt werden kann.

Das Vorratslager 3 ermöglicht eine chargenweise Entnahme der Kraftfahrzeuge, wie dies z. B. für die Entsorgung von Kraftfahrzeugen des gleichen Typs vom gleichen Hersteller vorteilhaft ist, da dann der Einsatz gleichartiger Entsorgungsmittel und/oder gleichartiger Positionseinstellungen möglich ist. Die Chargen können jedoch auch so zusammengestellt werden, daß in Kraftfahrzeugen unterschiedlichen Typs oder unterschiedlichen Herstellers gleiche instandsetzbare Funktionsteile vorhanden sind, wie beispielsweise Motore, Getriebe und Antriebsstränge, oder daß gleiche Verglasungen zu entsorgen sind.

Vom Vorratslager 3 wird das ausgewählte Kraftfahrzeug einer Vorbereitungsstation 4 zugeführt, in der es nach Entfernen der Räder 5 auf einem Träger 6 zur weiteren Handhabung befestigt wird. Hier werden noch weitere Teile entnommen, wie Reserverad 7, Warndreieck 8, Fußmatten 9 und gegebenenfalls weitere lose Teile.

In der anschließenden Vordemontagestation 10 wird die Batterie 11 und die Motorhaube 12 entfernt.

Das Fahrzeug 1 wird anschließend der Trockenlegungsstation 13 zugeführt, in denen in mehreren aufeinanderfolgenden Trockenlegungsplätzen 14, 14', 14'', 14''' die flüssigen Betriebsmittel bis auf vernachlässigbare, nicht störende Reste entnommen werden. Im ersten Trockenlegungsplatz 14 werden der Treibstoff und die Kühlflüssigkeit gleichzeitig entnommen, danach wird hier auch noch der Treibstofftank 15 entfernt. Die Entfernung dieser beiden flüssigen, nahezu gleiche, geringe Viskosität aufweisenden Betriebsmittel nimmt in etwa die gleiche Zeitdauer in Anspruch, da in einem zu entsorgenden Kraftfahrzeug im allgemeinen ein Treibstoffrest von etwa fünf Litern verbleibt. Zur Entnahme des Treibstoffs wird der Treibstofftank 15 an der tiefsten Stelle geöffnet, der auslaufende Treibstoff wird aufgefangen und nach dem Auslaufen wird die Öffnung gegebenenfalls wieder verschlossen. Die Tankbefestigung wird durchtrennt, der Tank 15 ausgebaut und an anderer Stelle entgast und zerkleinert. Die Kühlflüssigkeit wird entnommen, indem beispielsweise der tiefste Kühlwasserschlauch geöffnet wird oder der Kühler an seiner tiefsten Stelle geöffnet wird.

Im Trockenlegungsplatz 14' wird die Viskosität der zählflüssigen Betriebsmittel ausreichend herabgesetzt, um den Zeitbedarf für die Entleerung zu minimieren. Im dargestellten Ausführungsbeispiel wird hierzu das Motor- bzw. Getriebegehäuse oder Hinterachsgehäuse und das darin befindliche Öl mittels Wärmestrahlung einer Wärmestrahlungsquelle 16 hinreichend erwärmt, um ein schnelles Ausfließen sicherzustellen. Es kann jedoch stattdessen oder zusätzlich jede andere Möglichkeit zur Herabsetzung der Viskosität eingesetzt werden. Abhängig vom Zeitbedarf für die Erwärmung und für die nachfolgenden Entsorgungsschritte kann die gleichzeitige Bearbeitung (Erwärmung der zähflüssigen Betriebsflüssigkeiten) mehrerer Kraftfahrzeuge im Trockenlegungsplatz 14' vorgesehen werden. Nach hinreichender Erwärmung wird das Fahrzeug dem Trockenlegungsplatz 14'' zugeführt, in dem die Entnahme der nun dünnflüssigen Öle stattfindet. Die Gehäuse werden an den tiefsten Stellen geöffnet, beispielsweise mit einem Werkzeug, das für die unterschiedlichsten Kraftfahrzeuge Verwendung finden kann. Nach dem Durchbohren, Durchstoßen oder Aufschneiden (z. B. von Getriebegehäusen ohne Ölablaßschrauben) oder dem Öffnen auf eine andere Art und Weise wird das Öl aufgefangen und den zugeordneten Auffangbehältern zugeleitet. Die Öffnung wird anschließend wieder verschlossen, damit eventuell doch noch vorhandene Reste bei einem späteren Schwenken oder Drehen des Fahrzeugs nicht stören können.

In dem sich anschließenden Trockenlegungsplatz 14''' werden die Bremsflüssigkeit und eventuell sonstige noch vorhandene flüssige Betriebsmittel wie Servoflüssigkeit entnommen. Zur Entnahme der Bremsflüssigkeit werden die Flüssigkeitsleitungen vor den Radbremszylindern durchtrennt und die Flüssigkeit entnommen. Hierzu umschließt ein Trennwerkzeug die Leitungen und dichtet sie beidseitig ab, durchtrennt sie und hält beide Enden dicht umschlossen. Die Öffnungsstelle wird zur Entnahme mit Unterdruck beaufschlagt oder es wird ein Überdruck auf den Vorratsbehälter für die Bremsflüssigkeit gegeben. Vorteilhaft ist dabei die Unabhängigkeit vom Fahrzeugtyp und daß eine Öffnung schwergängiger Entlüftungsnippel an den Radbremsen entfällt. In ähnlicher Weise können die Servoflüssigkeiten für z. B. Kupplung, Lenkung oder Federung entnommen werden. Das Entleeren kann ebenfalls durch Betätigen des zugehörigen Betriebssystems, beispielsweise der Lenkung zumindest unterstützt werden. Falls Motoröl (Schmieröl) und Servoöl (Hydrauliköl) in einem gemeinsamen Behälter gesammelt werden können, kann die Entsorgung der Servoflüssigkeiten auch in einem anderen Trockenlegungsplatz erfolgen.

Nach Durchlaufen der Trockenlegungsstation 13 werden in den Stationen 25 bis 28 Motor/Getriebe, Stoßdämpfer etc. entfernt, das Fahrzeug wird um 180° gedreht, das Dach 18 und die Verglasung sowie die Stoßfänger 19 werden entfernt und danach das Fahrzeug erneut um 180° in seine Ursprungsstellung gedreht. Anschließend werden weitere Teile wie Sitze 20, Armaturenbrett 21 etc. entfernt.

In der Presse 29 wird der Rest des Kraftfahrzeugs schließlich kompakt verpreßt, während die entnommenen Teile oder Betriebsmittel einer geeigneten Entsorgung zugeführt werden.

## Patentansprüche

1. Verfahren zur Entsorgung von Kraftfahrzeugen, bei dem die Fahrzeuge einer Vorbereitungs- bzw. Vordemontagestation zugeführt werden und bei dem danach in einer Betriebsmittel-Entsorgungsstation in mehreren Schritten flüssige Betriebsmittel entfernt werden, bevor das Fahrzeug zur Demontage weiterer Teile weiteren Stationen zugeführt und dabei gegebenenfalls verschwenkt oder gewendet wird, dadurch gekennzeichnet, daß vor dem Entfernen der zähflüssigen Betriebsmittel deren Viskosität auf chemischem oder physikalischem Wege herabgesetzt wird.

2. Verfahren nach einem oder mehreren der vorhergehenden Ansprüche, dadurch gekennzeichnet, daß zunächst leicht entflammbare Flüssigkeiten und ihr zugehöriges Vorratssystem entfernt werden.

3. Verfahren nach Anspruch 2, dadurch gekennzeichnet, daß danach die zähflüssigen Betriebsmittel und/oder die leichtflüssigen Betriebsmittel entfernt werden.

4. Verfahren nach einem oder mehreren der vorhergenden Ansprüche, dadurch gekennzeichnet, daß die zähflüssigen Betriebsmittel erwärmt werden.

5. Verfahren nach einem oder mehreren der vorhergehenden Ansprüche, dadurch gekennzeichnet, daß Betriebsmittel nahezu gleicher Viskosität und nahezu gleicher durchschnittlicher Menge, insbesondere der leicht entflammbare Treibstoff und die Kühlflüssigkeit, gleichzeitig entfernt werden.

6. Verfahren nach einem oder mehreren der vorhergehenden Ansprüche, dadurch gekennzeichnet, daß durch Betreiben des das flüssige Betriebsmittel aufweisenden Betriebssystems die Entfernung des Betriebsmittels vorgenommen oder unterstützt wird.

7. Verfahren nach einem oder mehreren der vorhergehenden Ansprüche, dadurch gekennzeichnet, daß die Erwärmung durch Wärmestrahlung, Konvektion oder in direktem Kontakt mit einem Heizelement erfolgt.

8. Verfahren nach einem oder mehreren der vorhergehenden Ansprüche, dadurch gekennzeichnet, daß dem Betriebsmittel ein Mittel zugesetzt wird, die beim Einwirken eines elektrischen, magnetischen oder elektromagnetischen Wechselfeldes eine Erwärmung bewirkt.

9. Verfahren nach einem oder mehreren der vorhergehenden Ansprüche, dadurch gekennzeichnet, daß die Fahrzeuge aus einem Vorratslager chargenweise entnommen werden.

10. Verfahren nach Anspruch 9, dadurch gekennzeichnet, daß bei einer Charge gleichartige Werkzeuge oder Werkzeugeinstellungen zum Einsatz kommen.

11. Verfahren nach Anspruch 10, dadurch gekennzeichnet, daß bei einer Charge gleiche vorzugsweise instandsetzbare Funktionsteile, insbesondere gleiche Motore, Getriebe oder Antriebsstränge, entnommen werden.

## Claims

1. Method of disposing of motor vehicles, whereby the vehicles are brought to a preparation or preliminary disassembly station and then in an operating materials disposal station liquid operating materials are removed in a plurality of steps before the vehicle is transferred to further stations for the purpose of dismantling further parts and in the process is possibly swivelled or turned, characterized in that, prior to removal of the viscous operating materials, their viscosity is reduced in a chemical or physical manner.

2. Method according to one or more of the preceding claims, characterized in that highly inflammable liquids and their associated storage system are removed first.

3. Method according to claim 2, characterized in that the viscous operating materials and/or the low/viscosity operating materials are then removed.

4. Method according to one or more of the preceding claims, characterized in that the viscous operating materials are heated.

5. Method according to one or more of the preceding claims, characterized in that operating materials of substantially similar viscosity and of a substantially similar averse quantity, in particular the highly inflammable fuel and the cooling liquid, are removed simultaneously.

6. Method according to one or more of the preceding claims, characterized in that removal of the operating material is effected or assisted by operation of the operating system containing the liquid operating material.

7. Method according to one or more of the preceding claims, characterized in that the heating is effected by heat radiation, convection or in direct contact with a heating element.

8. Method according to one or more of the preceding claims, characterized in that there is added to the operating material an agent which effects heating under the action of an electric, magnetic or electromagnetic alternating field.

9. Method according to one or more of the preceding claims, characterized in that the vehicles are removed in batches from a storage location.

10. Method according to claim 9, characterized in that similar tools or tool adjustments are used for a batch.

11. Method according to claim 10, characterized in that identical, preferably repairable operating parts, in particular identical engines, gear units or power trains, are removed from a batch.

## Revendications

1. Procédé d'élimination de véhicules automobiles, dans lequel les véhicules sont envoyés à un poste de préparation ou de prédémontage et dans lequel les fluides de fonctionnement liquides sont ensuite éliminés en plusieurs étapes, dans un poste d'élimination de fluide de fonctionnement, avant que le véhicule soit envoyé vers d'autres postes pour le démontage d'autres éléments et ce faisant, soit éventuellement pivoté ou retourné, caractérisé en ce qu'avant l'élimination des fluides de fonctionnement visqueux leur viscosité est abaissée par voie chimique ou physique.

2. Procédé selon l'une ou plusieurs des revendications précédentes, caractérisé en ce que sont éliminés d'abord les liquides facilement inflammables et leur système de réserve correspondant.

3. Procédé selon la revendication 2, caractérisé en ce que les fluides de fonctionnement visqueux et/ou les fluides de fonctionnement très liquides sont ensuite éliminés.

4. Procédé selon l'une ou plusieurs des revendications précédentes, caractérisé en ce que les fluides de fonctionnement visqueux sont chauffés.

5. Procédé selon l'une ou plusieurs des revendications précédentes, caractérisé en ce que les fluides de fonctionnement de viscosité à peu près égale et en quantité moyenne à peu près égale, en particulier le carburant facilement inflammable et le liquide de refroidissement, sont éliminés en même temps.

6. Procédé selon l'une ou plusieurs des revendications précédentes, caractérisé en ce que par fonctionnement du système comportant le fluide de fonctionnement liquide, il est procédé à l'élimination du fluide de fonctionnement ou celle-ci est facilitée.

7. Procédé selon l'une ou plusieurs des revendications précédentes, caractérisé en ce que le chauffage s'effectue par rayonnement thermique, convexion ou par contact direct avec l'élément chauffant.

8. Procédé selon l'une ou plusieurs des revendications précédentes, caractérisé en ce qu'au fluide de fonctionnement est ajouté un produit, qui provoque un échauffement lorsqu'agit un champ alternatif électrique, magnétique ou électromagnétique.

9. Procédé selon l'une ou plusieurs des revendications précédentes, caractérisé en ce que les véhicules sont prélevés par charges d'un stock de réserve.

10. Procédé selon la revendication 9, caractérisé en ce que pour une charge on utilise des outils ou des réglages d'outil de même type.

11. Procédé selon la revendication 10, caractérisé en ce que pour une charge on prélève des éléments fonctionnels identiques, pouvant de préférence être remis en état, en particuliers, des transmissions ou des chaînes cinématiques identiques.
